# EUROPEAN PATENT SPECIFICATION

(11) **EP 3 671 069 B1**
(45) Date of publication and mention of the grant of the patent: **05.10.2022**
(21) Application number: 18461651.4
(22) Date of filing: 19.12.2018
(51) Int. Cl.: F25B 39/04, B60H 1/00, F25B 43/00, F28F 19/01, F28B 1/06, B01D 35/02, F28D 21/00, F28F 9/02

(54) **HEAT EXCHANGER WITH FILTER, FOR REFRIGERANT FLUID LOOP**
WÄRMETAUSCHER MIT FILTER FÜR KÜHLMITTELKREISLAUF
ÉCHANGEUR DE CHALEUR AVEC FILTRE, POUR BOUCLE DE FLUIDE RÉFRIGÉRANT

(43) Date of publication of application: 24.06.2020
(73) Proprietor: Valeo Autosystemy SP. Z.O.O., 32-050 Skawina (PL)
(72) Inventor: BELZOWSKI, Michal, PL 32-050 Skawina (PL); POKRYWINSKI, Karol, PL 32-050 Skawina (PL); CICHOSZ, Filip, PL 32-050 Skawina (PL); SZOSTEK, Dawid, PL 32-050 Skawina (PL)
(74) Representative: Valeo Systèmes Thermiques

(56) References cited:
- WO-A1-2014/093785
- CN-U- 205 048 809
- CN-Y- 201 333 348
- JP-A- 2017 053 590
- US-B1- 6 622 517

## Description

The present invention relates to the domain of heat exchangers designed for refrigerant fluid loops. More specifically, the present invention concerns devices for filtering the refrigerant fluid that flows through such heat exchangers.

A refrigerant fluid loop generally comprises at least two heat exchangers, at least one compressor and at least one expansion device. The compressor and the expansion device are both fragile and comprise movable elements that can easily break. It is therefore important that only the refrigerant fluid enters this compressor or the expansion device. In order to achieve that goal, it is already known to filter the refrigerant fluid before it reaches one of these components.

However, some particles may be inside heat exchangers, for instance due to manufacturing processes or default in the cleaning system of such heat exchanger. The cleaning of such particles appears to be really expensive and complex. And even with all the care that can be given to this cleaning, some of those particles, especially particles that have a diameter smaller than 60µm can remain in those heat exchangers and can then be dragged by the refrigerant fluid to finally damage the compressor, the expansion device or any other element in which this refrigerant fluid could flow.

As a result, automotive suppliers are more and more concerned with this filtration, and they aim to filter even smaller particles than what is already filtered. Examples are disclosed in documents JP2017053590A, US6622517B1 or CN201333348Y.

The present invention solves at least this issue, by providing a heat exchanger, as defined by appended independent claim 1, for a refrigerant fluid loop, the heat exchanger inter alia comprising at least one inlet configured to allow a refrigerant fluid to enter in the heat exchanger and at least one outlet configured to allow the refrigerant fluid to exit the heat exchanger, the heat exchanger comprising at least one block in which a filter is arranged, this filter being adapted to filter the refrigerant fluid. According to the invention, the block is arranged downstream the outlet, and this block comprises at least one fixation means , with the characteristics further specified by independent claim 1, which holds the filter in a determined position. The words "determined position" must here be understood as a position in which the filter is able to filter the most of the refrigerant fluid that flows though the block, and advantageously, a position in which the filter is able to filter all the refrigerant fluid that flows through said block.

More precisely, the block is arranged immediately downstream the outlet. In other words, said block comprises at least one inlet configured to allow the refrigerant fluid to enter the block and at least one outlet configured to allow the refrigerant fluid to exit the block, the block being connected to the outlet of the heat exchanger through its inlet. As a result, all the refrigerant fluid that exits the heat exchanger goes through the block, and thus through the filter.

According to the invention, at least one path is arranged in the block, the filter being accommodated in said at least one path and the at least one fixation means comprises at least one deformable ring interposed between the filter and a wall defining the path of the block. According to the invention, the deformable ring, at least, contributes to hold the filter in the determined position within the path of the block, and, advantageously, it can also have a sealing function, forcing all the refrigerant fluid to flow through the filter. In other words, the deformable ring on one hand contributes to the maintaining of the filter in the determined position and can, on the other hand, prevent bypassing of such filter, ensuring that all the refrigerant fluid that exits the heat exchanger is filtered before reaching any other component of the refrigerant fluid loop.

According to an aspect of the invention, at least one groove can be arranged in the wall defining the path of the block, the deformable ring being received in the at least one groove. According to an example of the invention, the deformable ring can be a circlip. According to another embodiment of the invention, the deformable ring can comprise a synthetic material and be overmolded on an external face of the filter. The words "external face" here refer to a face of the filter which faces the wall defining the path of the block when the filter is accommodated in said path. Alternately, the deformable ring which comprises the synthetic material can be glued to the external face of the filter. Any other known means can be used to secure the deformable ring on the filter without departing from the scope of the invention.

According to an embodiment not forming part of the invention, the fixation means comprise at least one abutment surface extending from the wall defining the path arranged in the block, in the direction of the filter, and the filter comprises an external face on which at least one tab is arranged, said at least one tab abutting the abutment surface of the filter. For instance, the at least one tab can be made of, or at least can comprise, an elastic material. Advantageously, the filter can comprise a plurality of tabs.

According to an alternative embodiment, which forms part of the invention, the fixation means comprises at least one pressing means which is arranged between the wall defining the path of the block and the external face of the filter, the pressing means applying pressure on this external face of the filter, in the direction of the deformable ring.

According to an aspect not forming part of the invention, the filter can comprise a collar and the pressing means can be formed by a spring which is compressed between the collar of the filter and the wall defining the path of the block. Alternately, within the invention, the pressing means can be formed by at least one elastic arm which emerges from the wall defining the path of the block, at least one free end of this elastic arm applying pressure against the external face of the filter.

According to an aspect of the invention, the filter comprises a frame which holds at least one meshed element, this meshed element forming a filtering part of this filter. For instance, this at least one meshed element is configured to filter particles which present a diameter bigger than 30µm. In other words, this filter is adapted to retain particles which have such diameter, preventing them from reaching the rest of the refrigerant fluid loop where they could damage other components of such refrigerant fluid loop.

For instance, the block can comprise aluminium. According to an example of application of the invention, the heat exchanger is used as a condenser, that is to say that this heat exchanger is configured to allow the refrigerant fluid that flows through it to cool and, as a result, to liquefy.

Of course, all the examples given above of the fixation means can be combined, that is to say that, according to the invention, the fixation means can comprise, simultaneously, the sealing device and/or the abutment surface in addition to the pressing means.

Other features, details and advantages of the invention can be inferred from the specification of the invention given hereunder. Various embodiments are represented in the figures, wherein:
- figure 1 is a schematic representation of a refrigerant fluid loop comprising at least one heat exchanger according to the invention, this heat exchanger comprising at least one block in which a filter is arranged ;
- figure 2 is a perspective view of the block schematically illustrated on figure 1;
- figure 3 is a cross-section view of the block illustrated on figures 1 and 2 according to a first variant of a first embodiment not forming part of the invention but being helpful to understand the invention;
- figure 4 is a cross-section view of the block according to a second variant of the first embodiment not forming part of the invention but being helpful to understand the invention;
- figure 5 illustrates, schematically, a positioning device adapted to assist the assembly of the block according to the second variant of the first embodiment illustrated on figure 4;
- figure 6 is a perspective view of a filter according to a second embodiment, representing an alternative embodiment not forming part of the invention;
- figure 7 is a cross-section view of the block in which the filter illustrated on figure 6 is accommodated;
- figures 8 and 9 schematically illustrate the block according, respectively, to a first variant and to a second variant of a third embodiment wherein the first variant shown in Figure 8 represents an embodiment of the invention whilst the second variant shown in Figure 9 represents and embodiment merely helpful to understand the present invention. .

In the following specification, the words "upstream" and "downstream" both refer to a direction of circulation of a refrigerant fluid in the concerned object.

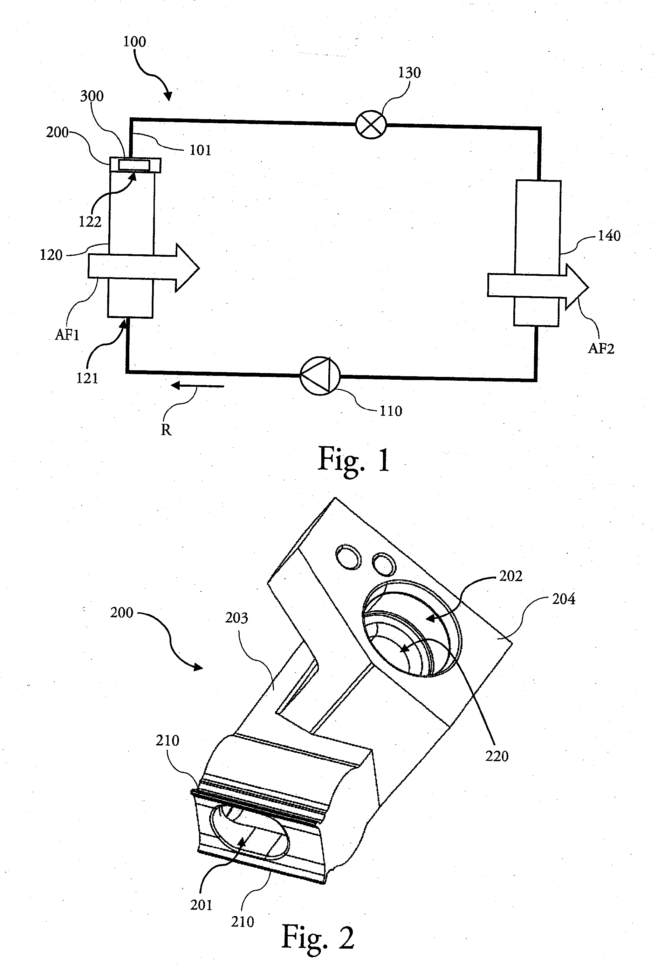

Figure 1 is a schematic view of a refrigerant fluid loop 100 intended to be accommodated in a motor vehicle. This refrigerant fluid loop 100 comprises at least a compressor 110 configured to increase the pressure of a refrigerant fluid R circulating through the loop 100, a first heat exchanger 120 configured to undertake a heat exchange between the refrigerant fluid R and a first airflow AF1, an expansion device 130 configured to decrease the pressure of the refrigerant fluid R and a second heat exchanger 140 configured to undertake a heat exchange between the refrigerant fluid R and a second airflow AF2. For instance, the first airflow AF1 is taken outside the motor vehicle in which the refrigerant fluid loop 100 is accommodated, and the second airflow AF2 is reserved to be sent in a passenger compartment of said motor vehicle.

According to the illustrated embodiment, the first heat exchanger 120 is realized according to the invention and comprises a block 200 in which, as explain in more details below, a filter 300 is arranged. According to the invention, this filter 300 is located at an outlet 122 of the heat exchanger, that is to say that the block 200 which houses said filter 300 is arranged downstream the first heat exchanger 120 along a flowing direction of the refrigerant fluid R, this flowing direction being illustrated by the arrow R.

First, the refrigerant fluid R exits the compressor 110 in a gaseous state and reaches the first heat exchanger 120, and more precisely it reaches an inlet 121 of the first heat exchanger 120. Once the refrigerant fluid R has entered the first heat exchanger 120, a transfer of calories is undertaken between said refrigerant fluid R circulating in this first heat exchanger 120 and the first airflow AF1 that flows through it. More precisely, the refrigerant fluid R gives calories to the first airflow AF1 and liquefies. In other words, the first heat exchanger 120 acts, in this particular example, as a condenser. As a result, the refrigerant fluid R exits the first heat exchanger 120 in a liquefied state and reaches the block 200 wherein it is filtered by the filter 300. In other words, it is to be understood that the block 200 is connected on one hand to an outlet 122 of the first heat exchanger 120 configured to allow the refrigerant fluid R to exit said first heat exchanger 120 and on the other hand to a pipe 101 of the refrigerant fluid loop 100. Then the refrigerant fluid R goes through the expansion device 130 in which its pressure is reduced before it reaches the second heat exchanger 140. In this second heat exchanger 140, the refrigerant fluid R takes calories from the second airflow AF2 and evaporates. The second airflow AF2 can then be sent to the passenger compartment to drop the temperature of this compartment and the refrigerant fluid R, which is again in a gaseous state, can again reach the compressor 110 to start a new cycle.

Generally speaking, the first heat exchanger 120 and the second heat exchanger 140 are similar and both comprise at least two manifolds or header tanks arranged at an extremity of a heat exchange area wherein the heat exchange between the refrigerant fluid and the first or the second airflow AF1, AF2 takes place. According to the invention, the outlet 122 of the first heat exchanger 120 is arranged in one of its head tanks, and the inlet 121 of this first heat exchanger 120 is arranged in the other one.

We are now going to describe with more details the block 200 connected to the first heat exchanger 120. For the rest of the specification, the words "first heat exchanger" and "heat exchanger" will be used with no distinction. Anyway, it is understood that the block 200 arranged downstream the outlet 122 of the first heat exchanger 120 could be placed downstream an outlet of the second heat exchanger without departing from the scope of the invention.

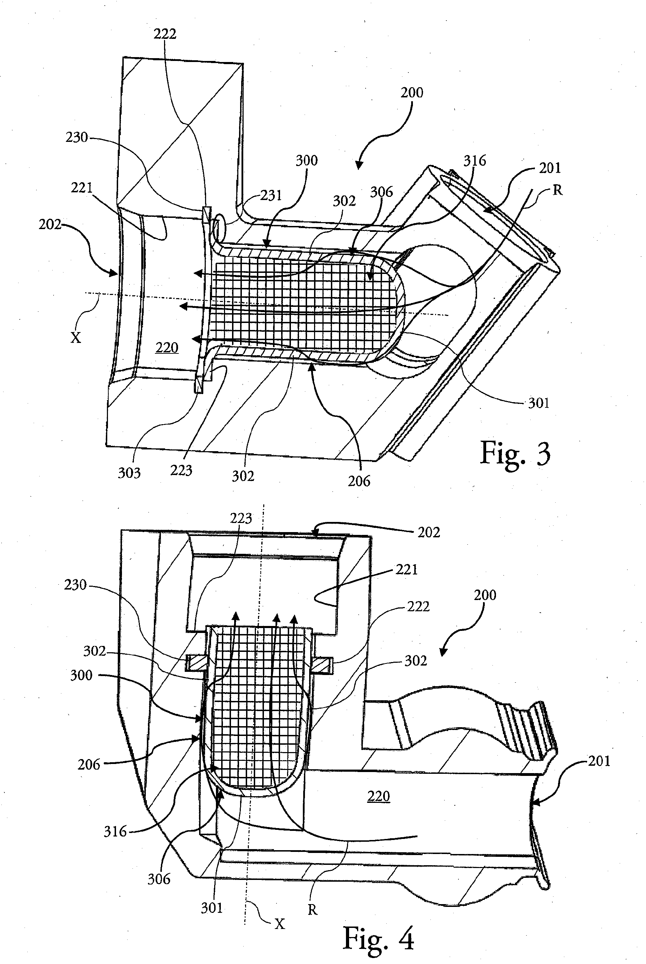

As illustrated on figure 2, the block 200 comprises at least one inlet 201 adapted to be connected to the outlet of the heat exchanger 120 and at least one outlet 202 configured to be connected to the pipe of the refrigerant fluid loop, the inlet 201 of the block 200 being adapted to allow refrigerant fluid to enter the block 200 and the outlet 202 of the block 200 being adapted to allow the refrigerant fluid to exit the block 200. As shown at least on figure 3, the filter is arranged between said inlet 201 and said outlet 202 of the block 200. In other words, the filter is adapted to filter the refrigerant fluid after its passage through the heat exchanger 120 and before it reaches the pipe, and consequently the rest of the refrigerant loop.

As partially shown on figure 2, a path 220 is arranged within the block 200, this path 220 extending between the inlet 201 and the outlet 202 of the block 200.

As detailed below, the block 200 comprises at least one fixation means adapted to hold the filter in a determined position, that is to say in a position in which the filter is able to filter as much refrigerant fluid as possible, advantageously, a position in which the filter is able to filter all the refrigerant fluid that flows through the block 200. For instance, the filter can be adapted to retain particles which have a diameter bigger than 30µm. More particularly, the filter comprises at least one frame which holds at least one meshed element, this meshed element forming the filtering part of said filter, that is to say the part of the filter adapted to retain the particles that have a diameter bigger than 30µm. Obviously, it is only an example of application of the invention and the filter can be adapted to filter particles of a different diameter within the scope of the invention.

As shown, crimping means 210 are arranged in the vicinity of the inlet 201 of the block 200. Especially, those crimping means 210 are arranged on either side of the inlet 201 of the block 200. Those crimping means 210 are configured to allow the crimping of the block 200 on the heat exchanger 120, and more precisely on one of the head tanks of this heat exchanger, advantageously on the head tanks in which the outlet of the heat exchanger is arranged.

We also note that the shape of this block 200 is adapted to be as less cumbersome as possible, so as to be easy to set in place. To this goal, the block 200 comprises at least one first part 203 and at least one second part 204, this second part 204 extending transversally to the first part 203. According to the example illustrated on figure 2, the first part 203 and the second part 204 form a single piece, that is to say that the first part 203 and the second part 204 cannot be separated without damaging at least the first part 203 or the second part 204. Optionally, the first part 203 and the second part 204 can be distinct from each other and soldered, for example brazed or welded together. According to the invention, the block 200 can comprise aluminium.

Figures 3 and 4 are cross-section views of the block illustrated on figure 2 according to a first embodiment , which does not form part of the invention since it does not show a pressing means, but which is still helpful to understand the present invention. These figures 3 and 4 making visible the filter 300. As shown, the filter 300 is arranged within the path 220 earlier mentioned which extends between the inlet 201 and the outlet 202 of the block 200. According to this first embodiment, the fixation means comprise at least one deformable ring 230 interposed between the filter 300 and a wall 221 defining the path 220 arranged in the block 200. According to this first embodiment, the filter 300 mainly extends along a longitudinal axis X and has a U-shaped cross-section, thus comprising a base 301 from which two branches 302 emerge.

According to a first variant of this first embodiment illustrated on figure 3, a collar 303 extends from an extremity of the two branches 204 of the U-shape, in the direction of the wall 221 defining the path 220. As shown, the base 301 of this U-shape is arranged closer to the inlet 201 of the block 200 than the collar 303 and this collar 303 is arranged closer to the outlet 202 of the block 200 than the base 301 of the filter 300. In other words, the refrigerant fluid R enters the block 200 through its inlet 201 and then reaches the filter 200 through its base 301, before exiting the block 200 through its outlet 202. Figure 3 only illustrates an example of the invention and it is understood that the filter 300 could be arranged in an opposite direction, that is to say that the collar 303 could be arranged closer to the inlet 201 than the base 301 of the filter 300

As illustrated, the deformable ring 230 is received in a groove 222 arranged in the wall 221 defining the path 220. According to the first variant of the first embodiment illustrated on figure 3, this groove 222 is arranged between the collar 303 of the filter 300 and the outlet 202 of the block 200. The wall 221 defining the path 220 also comprises a flat surface 223 adapted to receive the collar 303 of the filter 300. In other words, as shown on figure 3, this flat surface 223 extends perpendicularly, or sensibly perpendicularly, to the longitudinal axis X so that the collar 303 lies on this flat surface 223. Advantageously, the groove 222 which receives the deformable ring 230 is arranged immediately after this flat surface 223, the collar 303 of the filter 300 being, thus, in contact with both the flat surface 223 and the deformable ring 230. In other words, the deformable ring 230 presses the collar 303 of the filter 300 against the wall 221 defining the path 220 of the block 200, and more precisely against the flat surface 223 of such wall 221, permitting to hold the filter 300 in the determined position. Advantageously, by pressing the collar 303 of the filter 300 against the wall 221 defining the path 220 of the block 200, and more precisely, against the flat surface 223 as described above, the deformable ring 230 also contributes to create a sealing area 231 ensuring that all the refrigerant fluid R that flows through the block 200 actually goes through the filter 300. According to the first variant of the first embodiment, the deformable ring 230 can, for instance, be a circlip.

As earlier mentioned, the filter 300 comprises at least one frame 306 which holds at least one meshed element 316, this meshed element 316 forming the filtering part of the filter 300. According to the first variant of the first embodiment illustrated on figure 3, the meshed element 316 is arranged, at least, between the collar 303 and the base 301 of the filter 300. We can note that a diameter of the path 220 of the block 200 is bigger than a diameter of the filter 300, thus generating a space 206 between the filter 300 and the wall 221 defining the path 220. Obviously this space 206 is generated only upstream the sealing area 231. Advantageously, this space 206 permits to the refrigerant fluid R to reach the filter 300 not only through its base 301, but also through its branches, thus increasing, in combination with the presence of the meshed element 316 from the base 301 to the collar 303, the filtration surface available.

Figure 4 illustrates a second variant of the first embodiment According to this second variant of the first embodiment, the groove 222 which receives the deformable ring 230 is arranged upstream the flat surface 223 of the wall 221 defining the path 220, in a portion of the wall 221 which faces the branches 302 of the U-shape of the filter 300. It is understood from figure 4 that the deformable ring 230 completely surrounds the filter 300, thus firmly maintaining the filter 300 in the determined position. According to this second variant of the first embodiment, the deformable ring 230 can, for instance, comprise a synthetic material and be secured to the filter 300, and more precisely to an external face 305 of the filter 300, that is to say a face of the filter 300 which faces the wall 221 defining the path 220 of the block 200 when the filter 300 is accommodated within the block 200. According to various examples, the deformable ring 230 can be overmolded on the external face 305 of the filter 300 or it can be glued to this external face 305 of the filter 300.

According to this second variant of the first embodiment, the meshed element 316 which forms the filtering part of the filter 300 extends, at least, between the base 301 of the filter 300 and the deformable ring 230. In other words, the meshed element 316 extends, at least, where the refrigerant fluid R is guaranteed to flow, that is to say, upstream the deformable ring 230. Similarly to the first variant of the first embodiment, the diameter of the path 220 is bigger than the diameter of the filter 300, thus ensuring that all the meshed element 316 can contribute to the filtering of the refrigerant fluid R.

Finally, this second variant of the first embodiment differs from the first variant of this first embodiment in that the filter 300 does not comprise the collar which is supposed to lie against the flat surface 223 of the wall 221 defining the path. In other words, this flat surface is free.

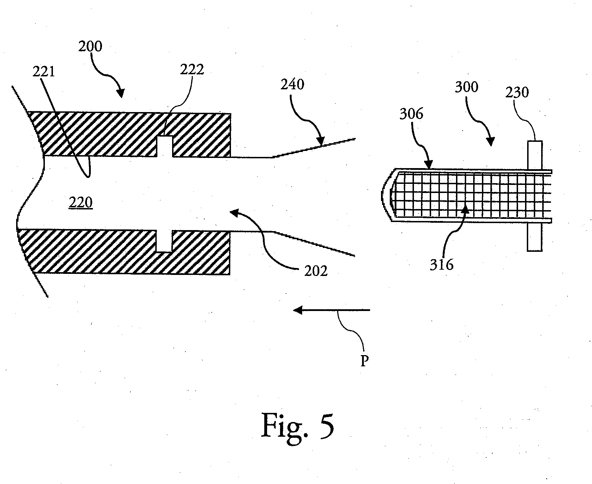

Figure 5 illustrates, schematically, a positioning device 240 adapted to facilitate the introduction of the filter 300 according to the second embodiment illustrated on figure 4, in the block 200. This positioning device 240 is temporarily threaded on the inlet or on the outlet of the block 300, depending on the orientation expected for the filter 300. According to the example illustrated on figure 5, the positioning device 240 is threaded on the outlet 202 of the block 200. As shown, the deformable ring 230 and the filter 300 can be pre-assembled, in order to be pushed together into the path 220 of the block 200. The filter 300 is pushed in the direction illustrated by the arrow P, the positioning device 240 being configured to guide this movement, that is to say to guide the filter 300 in the direction of the path 220 of the block 200. Advantageously, this positioning device 240 is also adapted to compress the pre-assembled deformable ring 230 facilitating even more the threading of the filter 300 in the path 220 of the block 200. Once the deformable ring 230 has reached the groove 222 arranged in the wall 221 defining the path 220, the filter 300 is hold in the determined position. The positioning device can thus be pulled out so as to leave room for the connection of the pipe of the refrigerant fluid, if the filter 300 is introduced through the outlet 202 of the block 200.

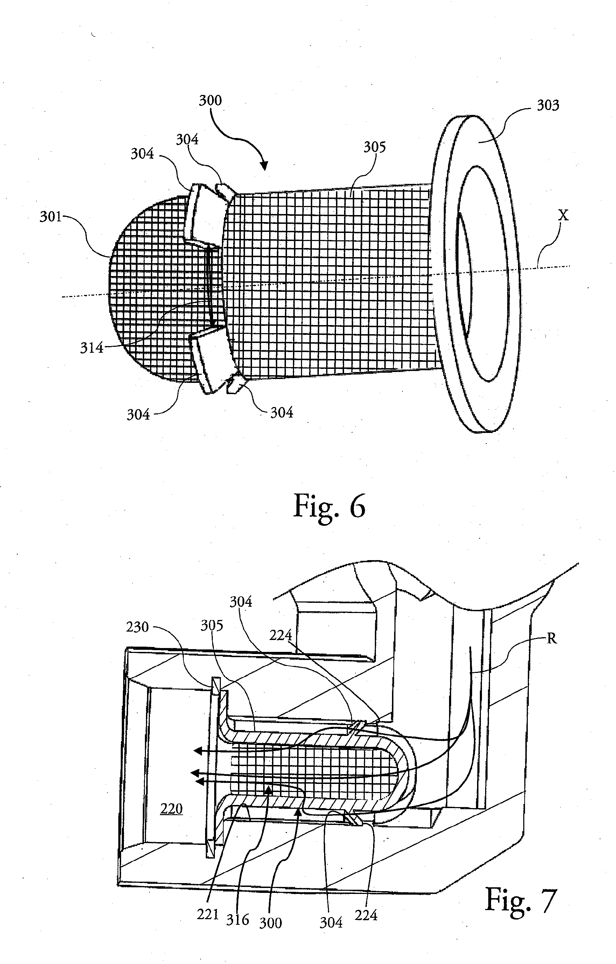

Figures 6 and 7 respectively illustrate a perspective view of the filter 300 according to a second embodiment , which is an embodiment helpful to understand the present invention as it represents an alternative configuration not forming part of the present invention, and a cross-section view of the block receiving such filter 300.

According to the second embodiment, the filter 300 presents a cylindrical shape, that is to say that the filter 300 according to this second embodiment of the invention also present, in a cross-section view, the U-shape described above. As shown on figure 6, the filter 300 comprises at least one tab 304, advantageously a plurality of tabs 304, which are arranged on an external face 305 of the filter 300. More precisely, those tabs 304 are arranged closer to the base 301 of the filter 300 than to its collar 303. As shown, at least in free space 314 is arranged between two successive tabs 304. These free spaces 314 permit to the refrigerant fluid R to reach the part of the filter 300 which is between the tabs 304 and the collar 303. In other words, those free spaces 314 are formed to increase the surface of the filter 300 which actually contributes to the filtering of the refrigerant fluid. As illustrated, the meshed element 316 of the filter according to this second embodiment of the invention thus extends from the base 301 to the collar 303 of the filter 300. For instance, these tabs 304 can be made of, or at least comprise, an elastic material, that is to say a material which is adapted to recover its original shape after any mechanical deformation.

The block 200 according to this second embodiment, differs from the block 200 according to the first embodiment in that at least one abutment surface 224 is formed on the wall 221 defining the path 220. This abutment surface 224 emerges from the wall 221 which defines the path 220 and extends in the direction of the path 220, that is to say in the direction of the filter 300 when this filter 300 is accommodated within the path 220.

As clearly shown on figure 7, the tabs 304 are designed to abut such abutment surface 224. To put it another way, the fixation means according to this second embodiment comprise both the deformable ring 230 as described above and the abutment surface 224 against which lie the tabs 304 arranged on the filter 300. The tabs 304 comprising elastic material, they tend to recover their original shape when they abut the abutment surface 224, thus contributing to hold the filter 300 in the determined position. In contrast to this, in an alternative according to the invention, at least one elastic arm 215 emerges from the wall 221 defining the path 220 of the block 200, where at least one free end 216 of this elastic arm 215 applies pressure against the external face 305 of the filter 300.

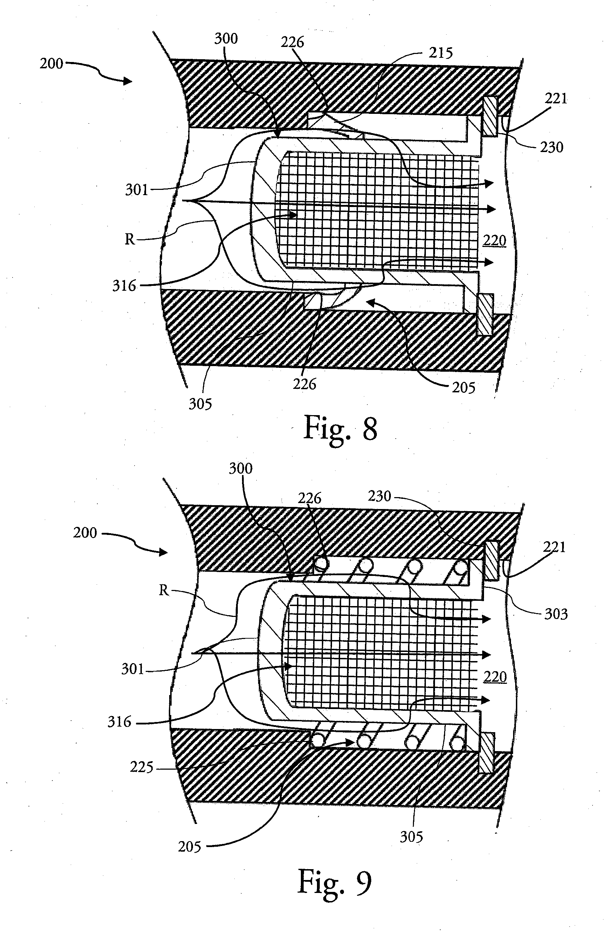

Figures 8 and 9 schematically illustrate, respectively, a first and a second variant of a third embodiment of the invention, wherein the first variant represents an embodiment of the invention, whilst the second variant is an embodiment not forming part of the invention but being helpful to understand the present invention.

This third embodiment of the invention differs from the first embodiment in that the fixation means comprise, in addition with the deformable ring 230, at least one pressing means 205. As illustrated on both figures 8 and 9, the pressing means 205 is compressed between the wall 221 defining the path 220 and the filter 300. Especially, those pressing means 205 are compressed between a notch 226 formed in the wall 221 defining the path 220 of the block 200 and the external face 305 of the filter 300. As a result these pressing means 205 exert pressure on the external face 305 of the filter 300, in the direction of the deformable ring 230, thus ensuring the maintaining of the filter 300 in the determined position.

As illustrated on figure 8, the pressing means 205 according to the first variant of this third embodiment , forming an embodiment according to the present invention, is realized by at least one elastic arm 215, that is to say an arm made of, or at least comprising, an elastic material. According to the example of the first variant of the third embodiment illustrated on figure 8, the pressing means 205 comprise three elastic arms 215 distributed around the external face 305 of the filter 300, only two of them being visible on figure 8. Advantageously, using a plurality of distinct elastic arms 215 contributes to maximise the surface of the filter 300 which actually filter the refrigerant fluid R. As illustrated by the arrows R, the integrity of the meshed element 316 can be crossed by the refrigerant fluid R, ensuring an efficient filtration.

These elastic arms 215 extend from the wall 221 defining the path 220 of the block 200, and more precisely from the notch 226 formed in such wall 221, and each presents a free end 216 which exerts pressure against the external face 305 of the filter 300. These elastic arms 215 comprising elastic material, they tend to recover their original shape when they are applied to the external face 305 of the filter 300, thus contributing to ensure that the filter 300 is hold is the determined position.

According to the second variant of the third embodiment , which second variant represents an embodiment not forming part of the invention but being helpful to understand the present invention, illustrated on figure 9, the pressing means 205 is formed by a spring 225 which is compressed between the notch 226 formed in the wall 221 defining the path 220 of the block 200, and the collar 303 of the filter 300. In a similar way to what have just been described with reference to the first variant of the third embodiment, the compressed spring 225 tend to recover its original shape, thus exerting pressure against the collar 303 of the filter 300, in the direction of the deformable ring 230, resulting in the maintaining of such filter 300 is the determined position. As illustrated, a diameter of the spring 225 is bigger than a diameter of the filter 300, and more precisely than a diameter of the external face 305 of the filter 300.

As shown by the arrows R which illustrate the refrigerant fluid flows, the difference between the diameter of the spring and the diameter of the filter 300 allows the refrigerant fluid R to be filtered by any part of the meshed element 316 of the filter 300. In other words, this difference between these two diameters ensures a filtration as efficient as possible.

Obviously, a block forming part of a heat exchanger comprising all features of appended independent claim 1 falls into the scope of the invention.

It will be understood from the foregoing that the present invention provides a simple, easily adaptable and easily replaceable means to filter the refrigerant fluid that exit a heat exchanger accommodated on a refrigerant fluid loop so as to prevent any damage on other components of such a refrigerant fluid loop. Advantageously, said means can be mounted directly or indirectly to the heat exchanger, allowing its use in a various number of refrigerant loops.

However, the invention cannot be limited to the means and configurations described and illustrated herein, the invention being solely defined by the appended independent claim. particular, the shape and arrangement of the parts of the block and/or the filter and/or the fixation means can be modified insofar as they fulfil the functionalities described in the present document and comprise all features specified in the appended independent claim.

## Claims

1. Heat exchanger (120) for a refrigerant fluid loop (100), the heat exchanger (120) comprising at least one inlet (121) configured to allow a refrigerant fluid (R) to enter in the heat exchanger (120) and at least one outlet (122) configured to allow the refrigerant fluid (R) to exit the heat exchanger (120), the heat exchanger (120) comprising at least one block (200) in which a filter (300) is arranged, this filter (300) being adapted to filter the refrigerant fluid (R), **characterized in that** the block (200) is arranged downstream the outlet (122), and **in that** said block (200) comprises at least one fixation means (205, 215, 224, 225, 230) which holds the filter (300) in a determined position, wherein at least one path (220) is arranged in the block (200), the filter (300) being accommodated in said at least one path (220) and wherein the fixation means (205, 215, 224, 225, 230) comprises at least one deformable ring (230) interposed between the filter (300) and a wall (221) defining the path (220) of the block (200), wherein the fixation means (205, 215, 224, 225, 230) comprises at least one pressing means (205) which is arranged between the wall (221) defining the path (220) of the block (200) and an external face (305) of the filter (300), the pressing means (205) applying pressure on this external face (305) of the filter, in the direction of the deformable ring (230), wherein the pressing means (205) is formed by at least one elastic arm (215) which emerges from the wall (221) defining the path (220) of the block (200), at least one free end (216) of this elastic arm (215) applying pressure against the external face (305) of the filter (300).

2. Heat exchanger (120) according to the preceding claim, wherein at least one groove (222) is arranged in the wall (221) defining the path (220) of the block (200), and wherein the deformable ring (230) is received in the at least one groove (222).

3. Heat exchanger (120) according to any of claim 1 or 2, wherein the deformable ring (230) is a circlip.

4. Heat exchanger (120) according to any of claims 1 or 2, wherein the deformable ring (230) comprises a synthetic material and is overmolded on an external face (305) of the filter (300).

5. Heat exchanger (120) according to any of the preceding claims, wherein the filter (300) comprises a frame (306) which holds at least one meshed element (316), this meshed element (316) forming a filtering part of this filter (300).

6. Heat exchanger (120) according to any of the preceding claims, wherein the block (200) comprises aluminium.

7. Heat exchanger (120) according to any of the preceding claims, wherein the heat exchanger (120) is used as a condenser.

8. Heat exchanger (120) according to any of the preceding claims, wherein the filter is configured to retain particle that present a diameter bigger than 30µm.

## Patentansprüche

1. Wärmetauscher (120) für eine Kühlmittelfluidschleife (100), wobei der Wärmetauscher (120) mindestens einen Einlass (121), der dazu ausgelegt ist, einem Kühlmittelfluid (R) zu ermöglichen, in den Wärmetauscher (120) einzutreten, und mindestens einen Auslass (122), der dazu ausgelegt ist, dem Kühlmittelfluid (R) zu ermöglichen, aus dem Wärmetauscher (120) auszutreten, umfasst, wobei der Wärmetauscher (120) mindestens einen Block (200) umfasst, in dem ein Filter (300) angeordnet ist, wobei das Filter (300) dazu geeignet ist, das Kühlmittelfluid (R) zu filtern, **dadurch gekennzeichnet, dass** der Block (200) stromabwärts des Auslasses (122) angeordnet ist, und dadurch, dass der Block (200) mindestens ein Befestigungsmittel (205, 215, 224, 225, 230) umfasst, welches das das Filter (300) in einer bestimmten Position hält, wobei mindestens ein Pfad (220) in dem Block (200) angeordnet ist, wobei das Filter (300) in dem mindestens einen Pfad (220) untergebracht ist, und wobei das Befestigungsmittel (205, 215, 224, 225, 230) mindestens einen verformbaren Ring (230) umfasst, der zwischen dem Filter (300) und einer Wand (221), die den Pfad (220) des Blocks (200) definiert, angeordnet ist, wobei das Befestigungsmittel (205, 215, 224, 225, 230) mindestens ein Druckmittel (205) umfasst, das zwischen der Wand (221), die den Pfad (220) des Blocks (200) definiert, und einer externen Fläche (305) des Filters (300) angeordnet ist, wobei das Druckmittel (205) Druck auf die externe Fläche (305) des Filters in der Richtung des verformbaren Rings (230) aufbringt, wobei das Druckmittel (205) durch mindestens einen elastischen Arm (215) gebildet ist, der aus der Wand (221), die den Pfad (220) des Blocks (200) definiert, hervortritt, wobei mindestens ein freies Ende (216) des elastischen Arms (215) Druck gegen die externe Fläche (305) des Filters (300) aufbringt.

2. Wärmetauscher (120) nach dem vorausgehenden Anspruch, wobei mindestens eine Nut (222) in der Wand (221), die den Pfad (220) des Blocks (200) definiert, angeordnet ist, und wobei der verformbare Ring (230) in der mindestens einen Nut (222) aufgenommen ist.

3. Wärmetauscher (120) nach einem der Ansprüche 1 oder 2, wobei der verformbare Ring (230) ein Achsensicherungsring ist.

4. Wärmetauscher (120) nach einem der Ansprüche 1 oder 2, wobei der verformbare Ring (230) ein synthetisches Material umfasst und an einer externen Fläche (305) des Filters (300) überspritzt ist.

5. Wärmetauscher (120) nach einem der vorausgehenden Ansprüche, wobei das Filter (300) einen Rahmen (306) umfasst, der mindestens ein Maschenelement (316) hält, wobei das Maschenelement (316) einen Filterungsteil des Filters (300) ausbildet.

6. Wärmetauscher (120) nach einem der vorausgehenden Ansprüche, wobei der Block (200) Aluminium umfasst.

7. Wärmetauscher (120) nach einem der vorausgehenden Ansprüche, wobei der Wärmetauscher (120) als ein Kondensator verwendet wird.

8. Wärmetauscher (120) nach einem der vorausgehenden Ansprüche, wobei das Filter dazu ausgelegt ist, Partikel zurückzuhalten, die einen Durchmesser größer als 30 µm aufweisen.

## Revendications

1. Échangeur de chaleur (120) pour une boucle de fluide réfrigérant (100), l'échangeur de chaleur (120) comprenant au moins une entrée (121) configurée pour permettre à un fluide réfrigérant (R) d'entrer dans l'échangeur de chaleur (120) et au moins une sortie (122) configurée pour permettre au fluide réfrigérant (R) de sortir de l'échangeur de chaleur (120), l'échangeur de chaleur (120) comprenant au moins un bloc (200) dans lequel un filtre (300) est agencé, ce filtre (300) étant adapté pour filtrer le fluide réfrigérant (R), **caractérisé en ce que** le bloc (200) est agencé en aval de la sortie (122), et **en ce que** ledit bloc (200) comprend au moins un moyen de fixation (205, 215, 224, 225, 230) qui retient le filtre (300) dans une position déterminée, dans lequel au moins un chemin (220) est agencé dans le bloc (200), le filtre (300) étant logé dans ledit au moins un chemin (220) et dans lequel le moyen de fixation (205, 215, 224, 225, 230) comprend au moins un anneau déformable (230) interposé entre le filtre (300) et une paroi (221) définissant le chemin (220) du bloc (200), dans lequel le moyen de fixation (205, 215, 224, 225, 230) comprend au moins un moyen de pression (205) qui est agencé entre la paroi (221) définissant le chemin (220) du bloc (200) et une face externe (305) du filtre (300), le moyen de pression (205) appliquant une pression sur cette face externe (305) du filtre, dans la direction de l'anneau déformable (230), dans lequel le moyen de pression (205) est formé par au moins un bras élastique (215) qui émerge de la paroi (221) définissant le chemin (220) du bloc (200), au moins une extrémité libre (216) de ce bras élastique (215) appliquant une pression contre la face externe (305) du filtre (300).

2. Échangeur de chaleur (120) selon la revendication précédente, dans lequel au moins une rainure (222) est agencée dans la paroi (221) définissant le chemin (220) du bloc (200), et dans lequel l'anneau déformable (230) est reçu dans l'au moins une rainure (222).

3. Échangeur de chaleur (120) selon l'une quelconque selon la revendication 1 ou 2, dans lequel l'anneau déformable (230) est un anneau d'arrêt.

4. Échangeur de chaleur (120) selon l'une quelconque des revendications 1 ou 2, dans lequel l'anneau déformable (230) comprend un matériau synthétique et est surmoulé sur une face externe (305) du filtre (300).

5. Échangeur de chaleur (120) selon l'une quelconque des revendications précédentes, dans lequel le filtre (300) comprend un cadre (306) qui retient au moins un élément maillé (316), cet élément maillé (316) formant une partie filtrante de ce filtre (300).

6. Échangeur de chaleur (120) selon l'une quelconque des revendications précédentes, dans lequel le bloc (200) comprend de l'aluminium.

7. Échangeur de chaleur (120) selon l'une quelconque des revendications précédentes, dans lequel l'échangeur de chaleur (120) est utilisé en tant que condenseur.

8. Échangeur de chaleur (120) selon l'une quelconque des revendications précédentes, dans lequel le filtre est configuré pour retenir des particules qui présentent un diamètre supérieur à 30 µm.
